# FASCICULE DE BREVET EUROPEEN

(11) **EP 2 567 166 B1**
(45) Date de publication et mention de la délivrance du brevet: **29.11.2017**
(21) Numéro de dépôt: 11723544.0
(22) Date de dépôt: 29.04.2011
(51) Int. Cl.: C21B 7/18, C21C 5/52, C21C 5/56, F27D 3/10, F27B 7/32, F27D 3/00, B65G 53/46

(54) **SAS A CLAPETS RESISTANT A LA CHALEUR**
HITZEBESTÄNDIGE LUFTSCHLEUSEN MIT BLENDEN
HEAT-RESISTANT AIRLOCK WITH SHUTTERS

(30) Priorité: 03.05.2010 FR 1053431
(43) Date de publication de la demande: 13.03.2013
(73) Titulaire: Appalette Tourtellier Systèmes, 68200 Mulhouse (FR)
(72) Inventeur: RIEFFEL, Luc, 68640 Muespach (FR)
(74) Mandataire: Hege, Frédéric
(86) Numéro de dépôt international: PCT/FR2011/050988
(87) Numéro de publication internationale: WO 2011/138545

(56) Documents cités:
- US-A- 2 626 066

## Description

### Domaine technique

La présente invention concerne un sas à clapets résistant à la chaleur.

Un certain nombre de procédés industriels se produisent dans un environnement chaud, de quelques centaines à plus de mille degrés Celsius. Par ailleurs certains de ces procédés sont confinés dans une enceinte fermée, et sensibles à la quantité d'air pénétrant dans, ou sortant de, cette enceinte. Or ces procédés nécessitent par ailleurs d'être alimentés en divers matériaux, que ce soient des matériaux servant de matière première pour le procédé, ou des matériaux source d'énergie pour le procédé. Dans certains cas il est avantageux d'alimenter ces procédés en continu, ou quasi continu. On utilise alors des sas avec au moins deux fermetures successives, la deuxième ne s'ouvrant que quand la première est fermée et réciproquement, de sorte que des matériaux peuvent passer, mais l'enceinte fermée où s'opère le procédé n'est jamais ouverte directement sur l'air extérieur. L'air ne peut que pénétrer dans l'enceinte par paquets successifs accompagnant les matériaux alimentés.

Un four de cimenterie utilise ce genre de sas pour limiter les échanges d'air entre le four et l'extérieur aux endroits d'alimentation, notamment en source d'énergie comme le charbon.

Les fours de cimenterie fonctionnent avec une flamme d'un côté d'une partie cylindrique rotative, produisant les températures élevées nécessaires dans ce type de four, la matière première - calcaire, argile essentiellement - étant introduite du côté opposé. Ainsi, la matière première est réchauffée petit à petit à l'approche de la flamme et est transformée chimiquement à proximité de cette flamme en clinker, lequel peut, après refroidissement, être broyé et, avec certains additifs, former du ciment.

On peut ajouter des combustibles alternatifs aux combustibles classiques - charbon, pétrole, gaz - au niveau de cette flamme, mais comme on se situe à la sortie des produits transformés, il faut être certain que ces combustibles sont entièrement consumés avant de les adjoindre au clinker. Cela impose de n'utiliser que des produits fins dans cette zone. Une autre raison de se limiter aux produits fins vient du fait que les combustibles envoyés dans la flamme doivent brûler avant de tomber sur la paroi du cylindre, sinon ils risquent de détériorer rapidement le revêtement réfractaire de ce cylindre. Les combustibles doivent donc comporter au moins une dimension très petite (comme des feuilles).

De plus en plus de fours sont équipés du côté de l'alimentation en matière première de tours dites « de préchauffage » dont la fonction est de transférer la chaleur des gaz du four à la matière première qui arrive, en constituant une sorte d'échangeur de chaleur. Ainsi, la matière première arrive dans la partie cylindrique du four déjà chaude et la transformation chimique nécessite moins d'énergie. Cette tour de préchauffage peut être avantageusement remplacée par une tour de précalcination, où, en plus de l'échange de chaleur, on dispose de flammes complémentaires pour encore davantage préchauffer la matière et dans certains cas commencer la transformation chimique.

Dans ces tours, on peut ajouter à la matière première différents combustibles grossiers tels que les pneus déchiquetés ou plastiques broyés, et dans certains cas même des pneus entiers qui accompagnent la matière première et qui, grâce à la température élevée produite par les gaz chauds, s'enflamment et ainsi contribuent à l'échauffement de la matière première.

Il existe des sas rotatifs, à 4 pales ou plus, permettant le passage d'un flux assez important de produit fin, le débit pouvant être réglé en agissant sur la vitesse de rotation. Le principe se rapproche de sas rotatifs à l'entrée de certaines zones commerciales ou de grands magasins.

Mais quand les produits sont plus grossiers, ce type de sas ne fonctionne pas bien, les particules grossières occasionnant des blocages des pales.

C'est notamment ce qui arrive quand le combustible considéré est constitué de déchets grossiers. En effet de plus en plus de cimenteries considèrent les énergies venant de déchets comme des sources d'énergie complémentaires, voire uniques, pour les fours. Au niveau de la flamme du four, on peut ajouter des déchets à condition de les broyer assez finement. Mais au niveau de l'entrée du four, des déchets plus grossiers sont acceptables, et sont donc utilisés du fait qu'on évite ainsi les frais de broyage.

### Technique antérieure

Dans ce but, il existe des sas à clapets, généralement avec deux clapets successifs. Le principe se rapproche alors d'avantage des sas sécuritaires par exemple à l'entrée d'une banque, où la première porte doit être refermée avant qu'il ne soit possible d'ouvrir la deuxième porte.

Ces clapets peuvent se présenter comme lesdites portes, on parle alors de fermeture par guillotine. Il peut s'agir d'une seule guillotine par clapet, ou de deux guillotines jumelles se rejoignant au milieu pour assurer la fermeture.

Malheureusement pour un certain nombre de produits difficiles, de telles guillotines viennent coincer du produit contre la paroi, ou contre la guillotine jumelle, ces produits restant alors collés à la guillotine, et constituant peu à peu un obstacle à la bonne fermeture des clapets. Par ailleurs le guidage des guillotines en translation n'est pas facile à maintenir, des produits collant dans les rails de guidage empêchant le bon fonctionnement des guillotines sur la durée. De plus le temps de fermeture et d'ouverture de telles guillotines est assez long, ce qui nuit d'une part à la continuité de l'alimentation, d'autre part à la capacité du sas en terme de débit.

Pour remédier à ce problème, il existe des sas à clapets à volets, soit à deux volets par clapet, soit à un seul volet par clapet, selon les dimensions et les choix technologiques. Ces volets sont mobiles en rotation, chacun autour d'un axe, et assurent la fermeture, non pas à la manière d'une porte coulissante comme les guillotines, mais à la manière d'une porte classique, par rotation autour d'un axe.

L'entraînement de ces volets se fait traditionnellement par un moteur électrique entrainant des cames. Ainsi, à chaque tour de l'arbre à cames, les volets sont poussés vers l'ouverture, puis relâchés, ce qui provoque leur fermeture, par l'action soit d'un contrepoids, soit de ressorts 17. L'inconvénient de cette solution est que les volets se ferment à une vitesse difficile à contrôler, et on observe donc fréquemment des chocs.

Le document US2 626 066 décrit un sas à clapets à entrainement électrique, dans lequel l'axe de sortie du motoréducteur tourne toujours dans le même sens, et c'est un système de bielle manivelle qui permet d'obtenir le mouvement d'aller et retour des volets du sas. Ce mouvement est difficile à contrôler précisément.

Une autre solution consiste à entrainer ces volets par des vérins pneumatiques. Cela permet de contrôler à la fois l'ouverture et la fermeture des volets. Mais la quantité d'air nécessaire pour les vérins n'est pas toujours disponible à l'endroit où ces sas à clapets sont installés. Par ailleurs les temps de cycles peuvent difficilement être réduits en dessous d'une douzaine de secondes.

### Exposé de l'invention

La présente invention a pour objet de remédier au moins en partie aux inconvénients cités ci-dessus, et propose un sas à clapets plus facile à utiliser, et permettant de réduire le temps de cycle.

Ainsi, la présente invention propose un sas à clapets chaque clapet comprenant au moins un volet et un motoréducteur à alimentation électrique pour réaliser l'ouverture et la fermeture dudit volet.

Le dispositif selon l'invention est particulier en ce que le motoréducteur comprend un axe de sortie apte à réaliser un mouvement rotatif d'aller et retour, associé au mouvement d'ouverture et de fermeture dudit volet. L'axe de sortie du moteur tourne dans un sens pour l'aller et entraine l'ouverture du volet, puis il s'arrête, puis tourne dans l'autre sens pour le retour et entraine la fermeture du volet.

L'avantage d'un tel dispositif réside dans le fait que l'ensemble du mouvement du volet est contrôlé et suivi par un motoréducteur à alimentation électrique, par tout moyen permettant de contrôler des mouvements avec ce type de moteur.

Selon d'autres caractéristiques :
- un variateur de fréquence peut être associé audit motoréducteur en vue de contrôler à tout moment sa vitesse de rotation ; ainsi la vitesse du volet est parfaitement maitrisée tant pour augmenter cette vitesse en vue de réduire le temps de cycle, que pour la réduire en fin de course pour éviter tout choc ; un tel variateur de fréquence peut être associé à un automate,
- un mécanisme de désolidarisation limitée peut être disposé entre le motoréducteur et le volet, ledit mécanisme transformant un déplacement imposé au volet par le motoréducteur en un effort imposé appliqué sur le volet tant que l'écart entre le déplacement qui serait imposé sans mécanisme de désolidarisation et le déplacement réel ne dépasse pas une valeur prédéterminée.

Cette disposition présente un intérêt particulier. En cas d'alimentation de produit très grossier par un sas à clapets équipé du dispositif selon l'invention, il arrive fréquemment qu'un produit épais se trouve entre le volet et sa face d'appui au moment où le volet est supposé se fermer. Il ne peut donc pas se fermer complètement, mais cela ne présente pas de problème particulier pour le procédé industriel. En revanche il peut aussi arriver qu'une pièce exceptionnellement épaisse empêche le volet de se fermer dans une mesure telle que l'ouverture permet un passage d'air inacceptable. Un automate gérant les mouvements du sas à clapets doit donc pouvoir faire la différence entre un « petit » défaut de fermeture, et un défaut « important » de fermeture. La disposition du mode de réalisation présenté permet de faire cette différence, en prédéterminant la valeur du défaut de fermeture en dessous duquel le défaut doit être considéré comme petit, et au dessus duquel il doit être considéré comme important. En effet les motoréducteurs sont généralement équipés de sécurités leur permettant de déclencher, c'est à dire d'arrêter l'alimentation électrique, en cas de couple trop important. En l'absence de mécanisme de désolidarisation, dès que le volet interrompt sa course, alors que le motoréducteur n'a pas terminé sa propre course, le couple augmente brutalement, et le moteur déclenche, interrompant l'alimentation du four en le produit concerné par le sas à clapets. Le mécanisme de désolidarisation permet au moteur de terminer sa course, car au lieu d'imposer un déplacement, il libère le déplacement, et impose un effort, qu'on a pris soin de déterminer en dessous de l'effort correspondant ou couple de déclenchement du motoréducteur. Au-delà d'un certain décalage, le mécanisme de désolidarisation atteint sa limite, et arrête de remplir sa fonction, le motoréducteur impose à nouveau un déplacement, et si cela se produit alors que la course du motoréducteur n'est toujours pas terminée (défaut important), le motoréducteur déclenche.

Selon d'autres caractéristiques encore :
- une bielle de commande du volet peut être disposée entre le motoréducteur et le volet, et ledit mécanisme de désolidarisation limitée peut être disposé dans ladite bielle de commande du volet ; une liaison par bielle assure un parfait contrôle des mouvements entre l'axe de sortie du motoréducteur et la rotation du volet,
- ledit axe de sortie du motoréducteur peut être solidaire d'un bras de moteur actionnant ladite bielle, ladite bielle actionnant par l'intermédiaire d'un axe glissant un bras de volet solidaire dudit volet, ledit mécanisme de désolidarisation limitée étant constitué dudit axe glissant, d'un trou oblong dans lequel ledit axe glissant est mobile en translation, et d'un ressort transmettant les efforts venant du motoréducteur de la bielle audit axe glissant ; une telle cinématique permet d'obtenir un mécanisme de désolidarisation limitée, la longueur du trou oblong étant par exemple déterminée en fonction de la limite fixée entre petit défaut et défaut important ; ledit ressort est par exemple défini pour suffire à fermer le volet en l'absence d'obstacle, et pour que l'effort qu'il applique soit inférieur à l'effort correspondant au couple de déclenchement du motoréducteur,
- une chaine mécanique peut être attachée par l'une de ses extrémités à un pignon solidaire de l'axe de sortie du motoréducteur, ledit pignon étant de préférence un pignon sans dents pour éviter les inconvénients liés à l'étirement de la chaine par usure, et en son autre extrémité à un contrepoids, configuré pour assurer la fermeture du volet en cas de défaillance du motoréducteur ; en effet il est important qu'en cas de défaillance du motoréducteur, notamment en cas d'absence de courant, le volet se mette spontanément en position fermée ; la présente disposition permet de réaliser cette condition,
- ledit sas à clapets peut comprendre un premier clapet et un deuxième clapet destinés à s'ouvrir successivement de manière à ce qu'en fonctionnement, à tout instant au moins l'un des deux clapets est en position fermée,
- chaque clapet peut être équipé d'un seul volet ; cela réduit le nombre de pièces à fabriquer, à monter, à maintenir, à démonter en fin de vie et à recycler,

La présente invention concerne aussi un clapet d'un sas à clapets selon l'invention.

La présente invention concerne enfin une méthode de manoeuvre d'un sas à clapets, chaque clapet comprenant au moins un volet disposé en position fermée sur un cadre d'appui et un motoréducteur à alimentation électrique, ladite méthode comprenant dans l'ordre les étapes suivantes :
- mise en rotation du motoréducteur dans un premier sens de rotation entrainant la mise en mouvement du volet en vue de son ouverture,
- arrêt de la rotation du motoréducteur à la fin de la course prévue pour l'ouverture du volet,
- mise en rotation du motoréducteur en sens contraire entrainant la mise en mouvement du volet en vue de sa fermeture,
- arrêt de la rotation du motoréducteur à la fin de la course prévue pour la fermeture du volet.

Selon un mode de réalisation préféré de l'invention, par le moyen d'un mécanisme de désolidarisation limitée disposé entre le motoréducteur et le volet, à la fin de la course du motoréducteur prévue pour la fermeture du volet,
- en l'absence d'obstacle entre ledit volet et son cadre d'appui le volet se ferme complètement,
- en présence d'un obstacle de dimension inférieure à une dimension prédéterminée ledit volet s'arrête sur l'obstacle sans que son arrêt provoque le déclenchement du motoréducteur, et
- en présence d'un obstacle de dimension supérieure à ladite dimension prédéterminée ledit volet s'arrête sur ledit obstacle et son arrêt provoque le déclenchement du motoréducteur.

Selon un mode particulièrement préféré de l'invention, une bielle de commande du volet est disposée entre le motoréducteur et le volet, et ledit mécanisme de désolidarisation limitée est disposé dans ladite bielle de commande du volet.

### Description sommaire des dessins

D'autres avantages de l'invention apparaîtront à la lecture de la description d'un exemple de réalisation et des dessins annexés, dans lesquels :
La figure 1 représente une vue en élévation d'un sas à clapets à volets selon l'invention,
La figure 2 représente une vue détaillée de l'entraînement d'un volet du sas à clapets de la figure 1, et
La figure 3 représente un diagramme de vitesse de l'axe de sortie du motoréducteur.

### Meilleure manière de réaliser l'invention

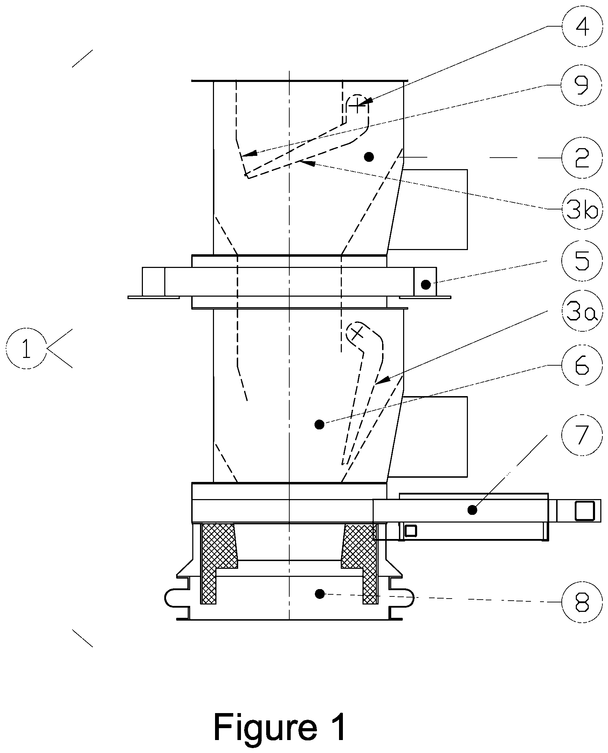

En référence à ces dessins, on voit sur la figure 1 un sas à clapets 1 selon l'invention. Un clapet supérieur 2 est disposé en position haute, et représente le premier clapet pour le flux de matière. Il comprend un volet 3, mobile en rotation autour d'un axe 4, de sorte qu'en position ouverte 3a il est proche de la verticale, et en position fermée 3b, il est proche de l'horizontale, de préférence incliné, par exemple d'environ 20° par rapport à l'horizontale. Le volet 3 peut être constitué d'acier inoxydable réfractaire, avec une bonne résistance à la chaleur. Juste en dessous du clapet supérieur 2 est disposée une bride 5, permettant d'attacher le sas à clapets 1 à la structure du bâtiment dans lequel le sas à clapets 1 est installé. Sous cette bride 5 est disposé un clapet inférieur 6, semblable au clapet supérieur 2, mais avec un revêtement interne en béton réfractaire pour protéger l'acier à chaudière utilisé pour la fabrication des clapets de la chaleur intense qui règne à ce niveau du sas à clapets 1 (couramment 500°C, et parfois jusque 1200°C). Un volet 3, qui peut être identique au volet 3 du clapet supérieur 2, est mobile en rotation autour d'un axe 4 comme pour le clapet supérieur 2.

Une guillotine 7 peut être installée sous le clapet inférieur 6. Son rôle est d'assurer une fermeture étanche en cas de problème. En effet en cas de problème la qualité de fermeture d'une guillotine est souvent préférée à la qualité de fermeture d'un volet 3. Cette guillotine 7 pouvant ne fonctionner qu'une fois par jour, dans le but de vérifier son bon fonctionnement, elle a peu l'occasion d'être encombrée de produits collés, et fonctionne bien. Son temps de fermeture est de plusieurs secondes, mais ce temps est le plus souvent tout à fait compatible avec les besoins de la sécurité. En effet des cas de fermeture de sécurité sont demandés par exemple en cas de panne générale de l'atelier, ou alors en cas de surpression anormale dans le four de cimenterie. Dans la majorité des cas, les problèmes en cas d'ouverture du sas à clapets 1 n'apparaissent pas dans les premières secondes, et une fermeture en 15 secondes est tout à fait suffisante. Si on souhaite une fermeture plus rapide, on peut cumuler la fermeture de la guillotine 7 est des clapets 2, 6 en cas de problème.

Enfin sous la guillotine 7 est disposée une onde de dilatation 8 permettant d'amortir les déplacements respectifs du four sur lequel le sas à clapets 1 est installé, et la structure de bâtiment auquel il est attaché, déplacements occasionnés par les différences de température respectives.

Selon les dispositions relatives du four et du bâtiment dans lequel il doit être monté, la bride 5 peut optionnellement être installée au-dessus du clapet supérieur 2, mais aussi au-dessous du clapet inférieur 6 ou même sous la guillotine 7. Dans ces deux dernières positions cette bride 5 devra pouvoir supporter des températures plus importantes, et dans certains cas elle sera également protégée par un revêtement de béton réfractaire.

On peut bien entendu prévoir également de revêtir de béton réfractaire les deux clapets 2, 6 du sas à clapets 1, et/ou l'ensemble des pièces constitutives du sas à clapets 1.

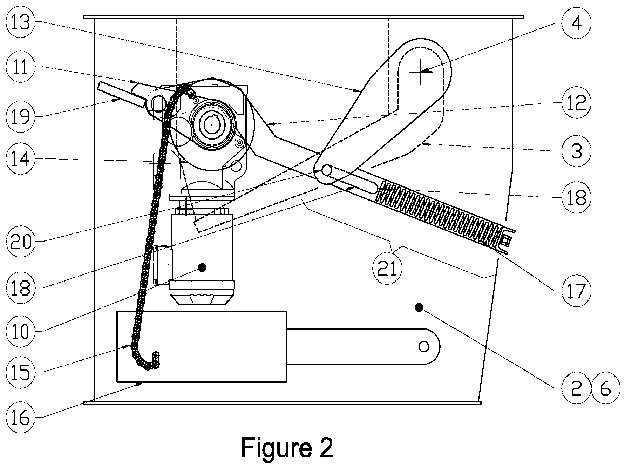

On voit sur la figure 2 le détail de l'entrainement d'un volet 3. Un motoréducteur 10 à alimentation électrique entraine en rotation un bras moteur 11, lui-même attaché à une bielle 12 actionnant un bras de volet 13 lié au volet 3 mobile en rotation autour de l'axe de rotation 4. Le bras moteur 11 est par ailleurs solidaire d'un pignon 14, de préférence sans dents, sur lequel est enroulée une chaine mécanique 15. Cette chaine est attachée par l'une de ses extrémités au pignon 14, et par son autre extrémité à un contrepoids 16. Dans le cas représenté ce contrepoids 16 est mobile en rotation autour d'un axe éloigné du point d'attache de la chaine mécanique 15, ce qui lui assure un guidage suffisant. Le contrepoids 16 a comme fonction d'assurer une position fermée au volet 3 en cas d'absence de courant. Le volet 3 est « normalement fermé », c'est à dire qu'il est fermé en l'absence de courant électrique, et cette caractéristique est obtenue grâce au contrepoids 16. Celui-ci exerce une force sur la chaine 15, qui entraine le pignon 14, lequel entraine le bras moteur 11, puis la bielle 12 et le bras de volet 13, et provoque enfin la fermeture du volet 3.

Un assemblage de deux ressorts spiraux guidés 17 est associé à la jonction entre la bielle 12 et le bras de volet 13. Grâce à un jeu longitudinal dans cette jonction obtenu par des trous oblongs 18, dans lesquels est logé un axe glissant 20, le bras de moteur 11 et la bielle 12 peuvent continuer leur mouvement et terminer leur course, même si un obstacle entre le volet 3 et son cadre d'appui 9 empêche le volet 3 de se fermer complètement, et donc si le bras de volet 13 arrête brutalement sa course. En effet, l'axe glissant 20, solidaire du volet 3, arrête alors sa course, alors que la bielle de commande 12 continue sa course grâce au trou oblong 18, jusqu'à la butée bielle 19.

Cette fonction est particulièrement utile pour faciliter la gestion automatique du sas à clapets 1. En effet, un automate gère chaque mouvement d'ouverture ou de fermeture du sas à clapets 1, et recueille des informations fournies par des capteurs, lui permettant d'enclencher certains programmes de fonctionnement. En particulier cet automate doit pouvoir ordonner la fermeture de la guillotine 7 en cas de problème. Un exemple d'un tel problème peut être le blocage des volets 3 en position ouverte, notamment par le fait d'une pièce encombrante empêchant leur fermeture. Néanmoins il est très fréquent quand la granulométrie des produits passant dans le sas à clapets 1 atteint quelques centaines de millimètres que le volet 3 ne se ferme pas complètement. Il reste alors une ouverture de quelques dizaines de millimètres entre le volet 3 et son cadre d'appui 9. Il serait inutile et improductif d'arrêter l'alimentation du four à chaque fois que cela se produit. On détermine donc une marge de manoeuvre, permettant au sas à clapets 1 de continuer à fonctionner en cas de mauvaise fermeture d'un volet 3, tant que cela reste dans des limites acceptables. Ces limites sont définies en terme de dimension maximale de l'obstacle toléré à la fermeture. On peut prévoir par ailleurs que dans le cas où une telle mauvaise fermeture acceptable se répète pour plus de, par exemple, trois fermetures successives, on considère qu'il y a un défaut important et on arrête l'installation.

Or un motoréducteur 10 possède généralement ses propres dispositifs de sécurité, notamment pour permettre l'arrêt de l'alimentation du moteur en courant électrique si le couple devient trop important, ceci pour éviter de risquer de griller le bobinage. On dit alors que le moteur « déclenche ». En l'absence de mécanisme complémentaire, dès qu'un obstacle empêche la fermeture du volet 3, le motoréducteur 10 actionne la fermeture, mais le volet 3 ne pouvant pas se fermer il se crée une tension, le couple grimpe et le moteur déclenche. Il est donc préférable d'implanter un mécanisme complémentaire 21 pour permettre au sas à clapets 1 de continuer à fonctionner tant que la fermeture des volets 3 est « suffisamment » effectuée, et de ne s'arrêter qu'au delà de la limite prédéterminée. Un tel mécanisme désolidarise le mouvement du volet 3 du mouvement de l'axe de sortie du motoréducteur 10, et peut donc être qualifié de mécanisme de désolidarisation 21. La désolidarisation n'est pas complète, mais est limitée à une certaine course, correspondant à la longueur du trou oblong 18. La désolidarisation est donc limitée, et au-delà de la course prédéterminée, correspondant à la longueur du trou oblong 18, le mouvement du volet 3 et celui du motoréducteur 10 redeviennent solidaires. Il s'agit donc bien d'un mécanisme de désolidarisation limitée.

La dimension de l'obstacle toléré par le volet 3 sans empêcher le bras de moteur 11 de terminer sa course est réglée par la longueur des trous oblongs 18. Ainsi la fermeture des volets 3 est provoquée par la poussée de la bielle 12 sur les ressorts 17, lesquels exercent à leur tour un effort correspondant sur l'axe glissant 20 solidaire du bras 13 du volet 3. Ainsi en cas de présence d'un obstacle, le mouvement du volet s'interrompt, la bielle de commande 12 continue d'exercer l'effort sur les ressorts 17 provoquant la compression desdits ressorts 17. Si l'obstacle est suffisamment petit, la course de la bielle 12 est terminée avant que l'axe glissant 20 atteigne l'extrémité du trou oblong 18. Si l'obstacle est trop grand, quand l'axe glissant 20 atteint l'extrémité du trou oblong 18 la bielle 12 est bloquée, cela fait grimper le couple, et le moteur déclenche. Cela provoque la fermeture immédiate de la guillotine 7 pour assurer la fermeture du sas à clapets 1.

Ce dispositif permet de rendre la gestion automatique du sas à clapets 1 moins sensible aux obstacles qui ne manquent pas de se présenter notamment quand le produit en vrac à faire passer par le sas à clapets 1 présente une granulométrie importante, par exemple de plusieurs centaines de millimètres. On peut alors régler le dispositif pour que par exemple un obstacle de 100 mm d'épaisseur soit « toléré » par le sas à clapets 1. Cela signifie que tant que le volet 3 termine sa course, ou atteint une position à moins de 100 mm de sa position fermée 3b, le sas à clapets 1 continue de fonctionner. Dès que le volet 3 n'atteint pas la position à 100 mm de sa position fermée 3b, on considère qu'il y a un défaut important, et on provoque alors le déclenchement du motoréducteur 10, pour arrêter l'installation. Les petits défauts sont gérés en douceur, et on n'arrête l'installation que pour les défauts importants. Les petits défauts sont néanmoins enregistrés par l'automate, et en cas de répétition systématique de petits défauts, on peut prévoir par l'intermédiaire de l'automate un arrêt de l'installation.

Le ressort spiral 17 peut aussi être remplacé par une lame ressort, ou par un dispositif à contrepoids. Tout dispositif permettant de transformer le déplacement imposé, caractéristique d'un système à bielle 12 associé à un motoréducteur 10 à alimentation électrique, en un effort imposé, par exemple par la force d'un ressort, ou le poids d'un contrepoids, peut convenir pour la présente invention.

Un variateur de fréquence est associé au motoréducteur 10 pour en contrôler à tout instant la vitesse de rotation. Cela permet par exemple d'augmenter la vitesse de rotation de l'axe du motoréducteur 10 en début d'ouverture ou de fermeture jusqu'à une vitesse assez élevée, pour permettre de réduire le temps de cycle, puis de réduire rapidement mais progressivement la vitesse en fin d'ouverture et de fermeture, et d'ainsi éviter des chocs de la bielle de commande 12 sur la butée 19, et des volets 3 sur le cadre d'appui 9 à la fermeture.

Par ailleurs la bielle 12 présente une forme arrondie du côté du motoréducteur 10, entourant l'axe du motoréducteur 10 dans la position du volet fermé 3b. Cette disposition permet d'accentuer encore les différences de vitesse entre le milieu de la course du volet 3 et la fin de sa course. En effet elle permet d'obtenir un rapport de vitesses de rotation de l'axe du motoréducteur 10 au volet 3, minimal en milieu de course, quand le point de fixation de la bielle 12 au bras moteur 11 se trouve au-dessus de l'axe de sortie du motoréducteur 10 et que sa vitesse de déplacement est sensiblement parallèle à la vitesse de déplacement de l'axe glissant 20, et donc une vitesse maximale du volet 3 pour une vitesse donnée de l'axe du motoréducteur 10. Ledit rapport de vitesses de rotation est par ailleurs maximal en fin de course quand ledit point de fixation se trouve à gauche dudit axe de sortie du motoréducteur 10 ou à sa droite, et que le mouvement dudit point de fixation est sensiblement perpendiculaire à la vitesse de déplacement de l'axe glissant 20. La vitesse de rotation du volet 3 est donc minimale en fin de course pour une vitesse de rotation donnée de l'axe du motoréducteur 10. A vitesse de rotation de l'axe du motoréducteur 10 constante, cela produit donc une faible vitesse de fermeture du volet 3 en fin de course de fermeture, et contribue à éviter les chocs, alors que la vitesse peut être élevée en milieu de course pour améliorer le temps de cycle. Cela produit par ailleurs une démultiplication de l'effort appliqué par le contrepoids 16 en fin de course, alors qu'en milieu de course une telle démultiplication n'est pas présente. Or l'effort de fermeture qu'il faut appliquer au volet 3 est maximal en position fermée 3b du fait du bras de levier à considérer pour le poids du volet 3 lui-même ainsi que pour le poids de produit pouvant se trouver à ce moment là sur le volet 3. La présente disposition permet donc une optimisation des vitesses et des efforts.

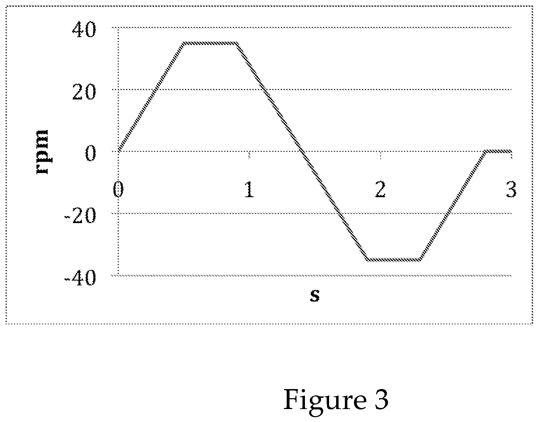

La figure 3 représente un diagramme cinématique pour un cycle d'ouverture et de fermeture d'un volet 3. On y a représenté en abscisse le temps en secondes, et en ordonnée la vitesse de rotation de l'axe de sortie du motoréducteur 10, en rpm (rotations per minute, ou tours par minute). Un cycle d'ouverture et de fermeture pour un volet 3 d'un clapet 2, 6 est représenté. On observe à la fin de la fermeture un temps à vitesse nulle. Ce temps peut être réduit à un temps très faible, mais sa présence est utile pour une bonne gestion chronologique des cycles, notamment pour effectuer un contrôle de fermeture avant d'ordonner l'ouverture du volet 3 du clapet adjacent 6, 2.

Après un tel cycle d'ouverture et de fermeture (ici d'une durée de 3 secondes), le volet 3 du premier clapet 2, 6 reste immobile pendant une durée similaire de 3 secondes, pendant laquelle le clapet adjacent 6, 2 s'ouvre puis se ferme selon un cycle similaire pour son volet 3.

Un dispositif selon l'invention permet ainsi d'obtenir un mouvement d'ouverture/fermeture d'un volet 3 en environ 3 secondes, ce qui donne un temps de cycle pour le sas à clapets 1 - ouverture / fermeture du clapet supérieur 2 puis ouverture / fermeture du clapet inférieur 6 - d'environ 6 secondes, nettement inférieur au temps de cycle obtenu par exemple avec des vérins pneumatiques, de l'ordre de 12 secondes. Ce bon résultat est obtenu grâce à une parfaite maîtrise de la cinématique du mouvement, par le choix d'un motoréducteur électrique 10, du mouvement d'aller retour, permettant d'accompagner complètement le mouvement du volet 3. La forme et disposition de la bielle de commande 12, permettant d'obtenir des vitesses élevées en milieu de course, et des vitesses très faibles en fin de course d'un volet 3, contribuent à améliorer encore le résultat. Bien que l'invention ait été décrite en liaison avec des structures particulières, elle n'y est nullement limitée et on peut y apporter de nombreuses variantes.

Les combinaisons des différentes réalisations représentées sur les dessins ou décrites ci-dessus ne sortent pas du cadre de l'invention. En particulier, on peut réaliser l'invention avec une variateur de vitesse comme décrit ci-dessus, et une bielle de commande 12 linéaire; on peut par ailleurs réaliser l'invention sans variateur de vitesse, avec une bielle de commande 12 comme décrite ci-dessus, assurant seule les accélérations et décélérations souhaitées.

Les numéros de référence suivants sont utilisés dans la présente demande, ainsi que sur les dessins annexés :
1. sas à clapets
2. clapet supérieur
3. volet - 3a : volet ouvert, 3b : volet fermé
4. axe de rotation du volet
5. bride
6. clapet inférieur
7. guillotine
8. onde de dilatation
9. cadre d'appui du volet
10.motoréducteur
11.bras de moteur
12.bielle de commande
13. bras de volet
14.pignon
15.chaine mécanique
16. contrepoids
17.ressort
18.trou oblong
19. butée bielle
20.axe glissant
21.mécanisme de désolidarisation limitée

Les signes de référence insérés après les caractéristiques techniques mentionnées dans les revendications ont pour seul but de faciliter la compréhension de ces dernières et n'en limitent aucunement la portée.

## Revendications

1. Sas à clapets (1), chaque clapet (2, 6) comprenant au moins un volet (3) et un motoréducteur (10) à alimentation électrique pour réaliser l'ouverture et la fermeture dudit volet (3), **caractérisé en ce que** le motoréducteur (10) comprend un axe de sortie apte à réaliser un mouvement rotatif d'aller et retour, associé au mouvement d'ouverture et de fermeture dudit volet (3).

2. Sas à clapets (1) selon la revendication précédente, dans lequel un variateur de fréquence est associé audit motoréducteur (10) en vue de contrôler à tout moment sa vitesse de rotation.

3. Sas à clapets (1) selon l'une des revendications précédentes, dans lequel un mécanisme de désolidarisation limitée (21) est disposé entre le motoréducteur (10) et le volet (3), ledit mécanisme (21) transformant un déplacement imposé au volet (3) par le motoréducteur (10) en un effort imposé appliqué sur le volet (3) tant que l'écart entre le déplacement qui serait imposé sans mécanisme de désolidarisation (21) et le déplacement réel ne dépasse pas une valeur prédéterminée.

4. Sas à clapets (1) selon la revendication précédente, dans lequel une bielle (12) de commande du volet (3) est disposée entre le motoréducteur (10) et le volet (3), et ledit mécanisme de désolidarisation limitée (21) est disposé dans ladite bielle (12) de commande du volet (3).

5. Sas à clapets (1) selon la revendication précédente, dans lequel ledit axe de sortie du motoréducteur (10) est solidaire d'un bras de moteur (11) actionnant ladite bielle (12), ladite bielle actionnant par l'intermédiaire d'un axe glissant (20) un bras de volet (13) solidaire dudit volet (3), ledit mécanisme de désolidarisation limitée (21) étant constitué dudit axe glissant (20), d'un trou oblong (18) dans lequel ledit axe glissant (20) est mobile en translation, et d'un ressort (17) transmettant les efforts venant du motoréducteur (10) de la bielle (12) audit axe glissant (20).

6. Sas à clapets (1) selon l'une des revendications précédentes, dans lequel une chaine mécanique (15) est attachée par l'une de ses extrémités à un pignon (14) solidaire de l'axe de sortie du motoréducteur (10), et en son autre extrémité à un contrepoids (16), configuré pour assurer la fermeture du volet (3) en cas de défaillance du motoréducteur (10), par exemple en cas d'absence de courant.

7. Sas à clapets (1) selon l'une des revendications précédentes, dans lequel chaque clapet (2, 6) est équipé d'un seul volet (3).

8. Sas à clapets (1) selon l'une des revendications précédentes, comprenant un premier clapet (2) et un deuxième clapet (6) destinés à s'ouvrir successivement de manière à ce qu'en fonctionnement, à tout instant au moins l'un des deux clapets (2, 6) est en position fermée.

9. Clapet (2, 6) d'un sas à clapets (1) selon l'une des revendications précédentes.

10. Méthode de manoeuvre d'un sas à clapets (1) selon l'une des revendications 1 à 8, chaque clapet (2, 6) comprenant au moins un volet (3) disposé en position fermée (3b) sur un cadre d'appui (9) et un motoréducteur (10) à alimentation électrique, **caractérisée en ce qu'**elle comprend dans l'ordre les étapes suivantes :
- mise en rotation du motoréducteur (10) dans un premier sens de rotation entrainant la mise en mouvement du volet (3) en vue de son ouverture,
- arrêt de la rotation du motoréducteur (10) à la fin de la course prévue pour l'ouverture du volet (3),
- mise en rotation du motoréducteur (10) en sens contraire entrainant la mise en mouvement du volet (3) en vue de sa fermeture,
- arrêt de la rotation du motoréducteur (10) à la fin de la course prévue pour la fermeture du volet (3).

11. Méthode selon la revendication précédente dans laquelle par le moyen d'un mécanisme de désolidarisation limitée (21) disposé entre le motoréducteur (10) et le volet (3), à la fin de la course du motoréducteur (10) prévue pour la fermeture du volet (3)
- en l'absence d'obstacle entre ledit volet (3) et son cadre d'appui (9) le volet (3) se ferme complètement,
- en présence d'un obstacle de dimension inférieure à une dimension prédéterminée entre ledit volet (3) et son cadre d'appui (9), ledit volet (3) s'arrête sur l'obstacle sans que son arrêt provoque le déclenchement du motoréducteur (10), et
- en présence d'un obstacle de dimension supérieure à ladite dimension prédéterminée entre ledit volet (3) et son cadre d'appui (9), ledit volet (3) s'arrête sur ledit obstacle et son arrêt provoque le déclenchement du motoréducteur (10).

12. Méthode selon la revendication précédente dans laquelle une bielle (12) de commande du volet (3) est disposée entre le motoréducteur (10) et le volet (3), et ledit mécanisme de désolidarisation limitée (21) est disposé dans ladite bielle (12) de commande du volet (3).

## Patentansprüche

1. Klappenschleuse (1), wobei jede Klappe (2, 6) mindestens einen Flügel (3) und einen elektrisch angetriebenen Getriebemotor (10) zum Öffnen und Schließen des Flügels (3) aufweist, **dadurch gekennzeichnet, daß** der Getriebemotor (10) eine Ausgangswelle aufweist, die in der Lage ist, eine Drehende Hin- und Rücklaufbewegung auszuführen, die der Öffnungs- und Schließbewegung des Flügels (3) zugeordnet ist.

2. Klappenschleuse (1) nach Anspruch 1, **dadurch gekennzeichnet, dass** dem Getriebemotor (10) ein Frequenzschieber zugeordnet ist, um seine Drehzahl jederzeit zu steuern.

3. Klappenschleuse (1) nach einem der vorhergehenden Ansprüche, **dadurch gekennzeichnet, dass** zwischen dem Getriebemotor und dem Flügel (3) ein begrenzter Trennmechanismus (21) angeordnet ist, der eine durch den Getriebemotor (10) gezwungene Verschiebung umwandelt in eine auf den Flügel (3) bewirkte gezwungene Kraft solange die Differenz zwischen der Verschiebung, die ohne den Trennmechanismus (21) bewirkt würde, und die tatsächliche Verschiebung einen vorbestimmten Wert nicht überschreitet.

4. Klappenschleuse (1) nach dem vorhergehenden Anspruch, **dadurch gekennzeichnet, dass** zwischen dem Getriebemotor (10) und dem Flügel (3) eine Steuerstange (12) des Flügels (3) angeordnet ist, und der begrenzte Trennmechanismus (21) ist in der Steuerstange (12) des Flügels (3) angeordnet.

5. Klappenschleuse (1) nach dem vorhergehenden Anspruch, **dadurch gekennzeichnet, dass** die Ausgangswelle des Getriebemotors (10) mit einem Motorarm (11) verbunden ist, der die Steuerstange (12) betätigt, wobei die Steuerstange einen an dem Flügel (3) befestigten Flügelarm (13) mittels einem Gleitstift bewirkt, wobei der Begrenzungsmechanismus (21) durch den Gleitstift (20), ein Langloch (18) worin der Gleitstift (20) länglich beweglich ist, und eine Feder (17) die vom Getriebemotor (10) kommenden Kräfte von der Steuerstange (12) auf den Gleitstift (20) überträgt.

6. Klappenschleuse (1) nach einem der vorhergehenden Ansprüche, **dadurch gekennzeichnet, dass** eine mechanische Kette mit einem seiner Enden an einem mit der Ausgangswelle des Getriebemotors fest verbundenen Ritzel befestigt ist und mit seinem anderen Ende an ein Gegengewicht (16), das zum Schließen des Flügels (3) im Falle eines Ausfalls des Getriebemotors (10), beispielsweise in Abwesenheit von Strom, ausgebildet ist.

7. Klappenschleuse (1) nach einem der vorhergehenden Ansprüche, **dadurch gekennzeichnet, dass** jede Klappe mit einem einzigen Flügel versehen ist.

8. Klappenschleuse (1) nach einem der vorhergehenden Ansprüche, mit einer ersten Klappe (2) und einer zweiten Klappe (6), das so konstruiert ist, dass sie sich nacheinander so öffnen, dass immer eine der beiden Klappen (2, 6) sich in der geschlossenen Stellung befindet.

9. Klappe (2, 6) einer Klappenschleuse (1) nach einem der vorhergehenden Ansprüche.

10. Verfahren zur Betätigung einer Klappenschleuse (1) nach einem der Ansprüche 1 bis 8, **dadurch gekennzeichnet, dass** jede Klappe (2, 6) mindestens einen in der geschlossenen Position (3b) an einem Rahmen (9) angeordneten Flügel (3) und einen elektrisch betriebenen Getriebemotor (10) aufweist, **dadurch gekennzeichnet, daß** er die folgenden Schritte aufweist:
- Drehung des Getriebemotors (10) in einer ersten Drehrichtung, wodurch der Flügel (3) sich bewegt, um sie zu öffnen,
- Stoppen der Drehung des Getriebemotors (10) am Ende des zum Öffnen des Flügels (3) vorgesehenen Hubes,
- Drehung des Getriebemotors (10) in die entgegengesetzte Richtung wodurch der Flügel (3) sich bewegt, um sie zu schließen,
- Stoppen der Drehung des Getriebemotors (10) am Ende des zum Schließen des Flügels (3) vorgesehenen Hubs.

11. Verfahren nach dem vorhergehenden Anspruch, bei dem am Ende des zum Schließen des Flügels (3) vorgesehenen Hubes des Getriebemotors (10), mittels eines zwischen dem Getriebemotor (10) und dem Flügel (3) angeordneten begrenzten Trennmechanismus (21),
- in Abwesenheit eines Hindernisses zwischen dem Flügel (3) und ihrem Lagerrahmen (9) schließt sich der Flügle (3) vollständig,
- in Gegenwart eines Hindernisses, kleiner als eine vorbestimmte Abmessung zwischen dem Flügel (3) und seinem Stützrahmen (9), anhält der Flügel an dem Hindernis, ohne dass dieses Anhalten den Getriebemotor (10) abschaltet, und
- in der Gegenwart eines Hindernisses, größer als diese vorbestimmte Abmessung zwischen dem Flügel (3) und seinem Stützrahmen (9), anhält der Flügel an dem Hindernis, und dieses Anhalten abschaltet den Getriebemotor (10).

12. Verfahren nach dem vorhergehenden Anspruch, **dadurch gekennzeichnet, dass** zwischen dem Getriebemotor (10) und dem Flügel (3) eine Steuerstange (12) des Flügels (3) angeordnet ist, und der begrenzte Trennmechanismus (21) ist in der Steuerstange (12) des Flügels (3) angeordnet.

## Claims

1. Airlock with shutters (1), each shutter (2, 6) comprising at least one flap (3) and an electrically powered geared motor unit (10) to open and close said flap (3), **characterized in that** the geared motor unit (10) comprises an output shaft capable of back-and-forth rotary movement associated with the opening and closing movement of said flap (3).

2. Airlock with shutters (1) according to claim 1, wherein a frequency converter is associated with said geared motor unit (10) in order to control its rotation speed at any time.

3. Airlock with shutters (1) according to one of the previous claims, wherein a limited disengaging mechanism (21) is arranged between the geared motor unit (10) and the flap (3), said mechanism (21) transforming a displacement imposed on the flap (3) by the geared motor unit (10) into an imposed stress applied to the flap (3) as long as the gap between the displacement which would be imposed without the disengaging mechanism (21) and the actual displacement does not exceed a predetermined value.

4. Airlock with shutters (1) according to the previous claim, wherein a connecting rod (12) for controlling the flap (3) is arranged between the geared motor unit (10) and the flap (3), and said limited disengaging mechanism (21) is arranged in said connecting rod (12) for controlling the flap (3).

5. Airlock with shutters (1) according to the previous claim, wherein said output shaft of the geared motor unit (10) is integral with a motor arm (11) actuating said connecting rod (12), said connecting rod actuating by means of a sliding axis (20) a flap arm (13) secured to said flap (3), said limited disengaging mechanism (21) consisting of said sliding axis (20), a slot (18) wherein said sliding axis (20) is movable in translation, and a spring (17) for transmitting the forces coming from the geared motor unit (10) of the connecting rod (12) to said sliding axis (20).

6. Airlock with shutters (1) according to one of the previous claims, wherein a mechanical chain (15) is attached by one end to a pinion (14) integral with the output shaft of the geared motor unit (10), and by its other end to a counterweight (16), configured to ensure closure of the flap (3) in case of a failure of the geared motor unit (10), for example in case of power failure.

7. Airlock with shutters (1) according to one of the previous claims, wherein each shutter (2, 6) is equipped with a single flap (3).

8. Airlock with shutters (1) according to one of the previous claims, comprising a first shutter (2) and a second shutter (6) designed to open successively so that in operation at any time at least one of the two shutters (2, 6) is in the closed position.

9. Shutter (2, 6) of an airlock with shutters (1) according to one of the previous claims.

10. Method for operating an airlock with shutters (1) according to one of the claims 1 to 8, each shutter (2, 6) comprising at least one flap (3) arranged in the closed position (3b) on a supporting frame (9) and an electrically powered geared motor unit (10), **characterized in that** it comprises, in order, the following steps:
- rotating the geared motor unit (10) in a first direction of rotation to generate the movement of the flap (3) for the opening thereof,
- stopping the rotation of the geared motor unit (10) at the end of the stroke intended for opening the flap (3),
- rotating of the geared motor unit (10) in the opposite direction to generate the movement of the flap (3) for the closing thereof, and
- stopping the rotation of the geared motor unit (10) at the end of the stroke intended for closing the flap (3).

11. Method according to the previous claim, wherein by means of a limited disengaging mechanism (21) arranged between the geared motor unit (10) and the flap (3), at the end of the stroke of the geared motor unit (10) intended for closing the flap (3)
- in the absence of an obstacle between said flap (3) and its supporting frame (9), the flap (3) closes completely,
- in the presence of an obstacle of a size smaller than a predetermined size between said flap (3) and its supporting frame (9), said flap (3) stops against the obstacle without its stop triggering the geared motor unit (10), and
- in the presence of an obstacle of a size greater than said predetermined size between said flap (3) and its supporting frame (9), said flap (3) stops against said obstacle and its stop triggers the geared motor unit (10).

12. Method according to the previous claim, wherein a connecting rod (12) for controlling the flap (3) is arranged between the geared motor unit (10) and the flap (3), and said limited disengaging mechanism (21) is arranged in said connecting rod (12) for controlling the flap (3).
